# EUROPEAN PATENT SPECIFICATION

(11) **EP 2 519 659 B1**
(45) Date of publication and mention of the grant of the patent: **25.06.2014**
(21) Application number: 10798799.2
(22) Date of filing: 21.12.2010
(51) Int. Cl.: C23C 28/00, C23C 28/04

(54) **NANO AND MICRO STRUCTURED CERAMIC THERMAL BARRIER COATING**
NANO- UND MIKROMETRISCHE KERAMISCHE WÄRMEDÄMMSCHICHT
BARRIÈRE THERMIQUE CERAMIQUE NANO- ET MICROSTRUCTURÉE

(30) Priority: 29.12.2009 EP 09016100
(43) Date of publication of application: 07.11.2012
(73) Proprietor: Siemens Aktiengesellschaft, 80333 München (DE)
(72) Inventor: SCHMITZ, Friedhelm, 46537 Dinslaken (DE); STAMM, Werner, 45481 Mülheim an der Ruhr (DE)
(86) International application number: PCT/EP2010/070347
(87) International publication number: WO 2011/080158

(56) References cited:
- EP-A1- 1 707 651
- EP-A1- 1 806 432
- EP-A1- 1 845 171
- EP-A1- 2 128 306
- EP-A2- 1 464 723
- WO-A1-2007/112783

## Description

The invention relates to a ceramic thermal barrier coating which has a nano-structured and a micro structured layer.

Thermal barrier coatings must offer a low thermal conductivity but also a good bonding to the substrate or to a metallic bond coat.

Especially the ductility of the thermal barrier coating should be improved.

It is therefore the aim of the invention to improve the ductility of the ceramic thermal barrier coating.

The problem is solved by a thermal barrier coating according to claim 1.

It shows
- figure 1: a schematic view of the invention,
- figure 2: a gas turbine,
- figure 3: turbine blade,
- figure 4: a combustion chamber,
- figure 5: a list of super alloys.

The following examples and figures are only embodiments of the invention.

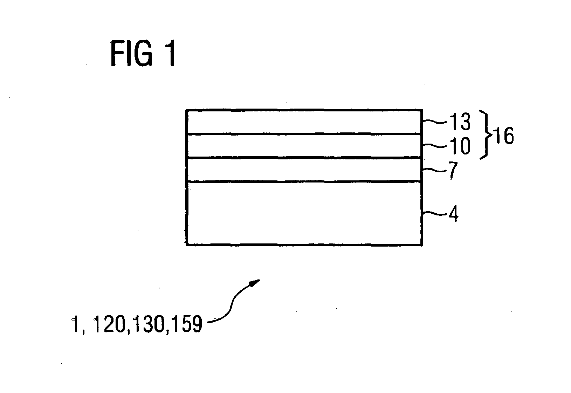

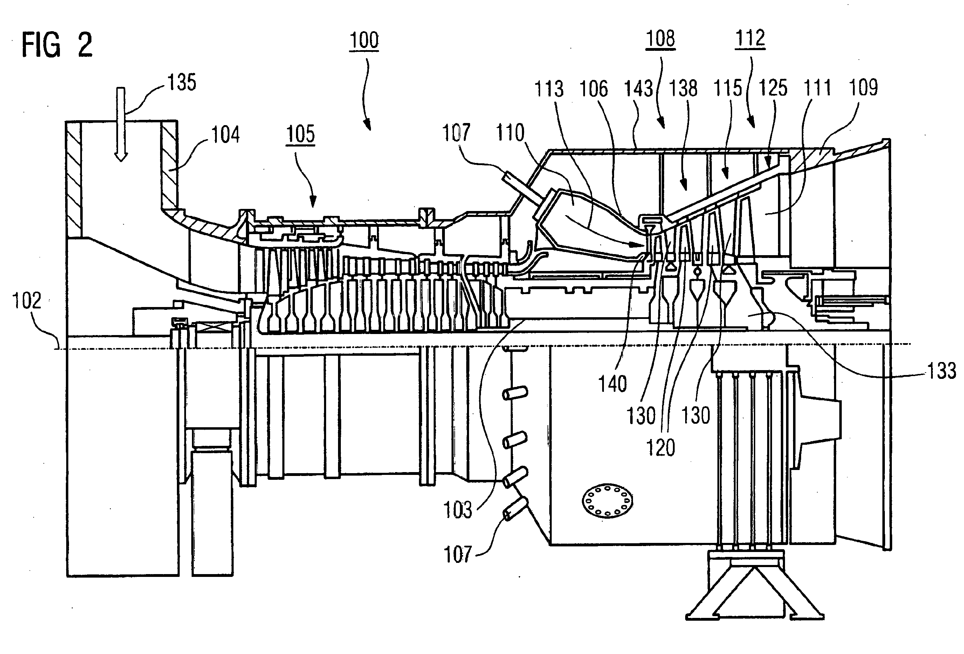

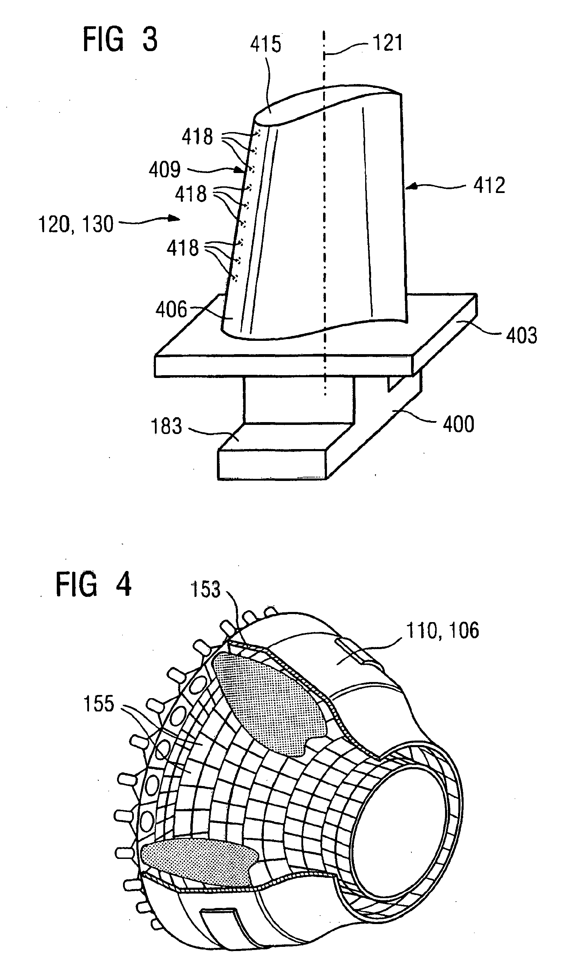

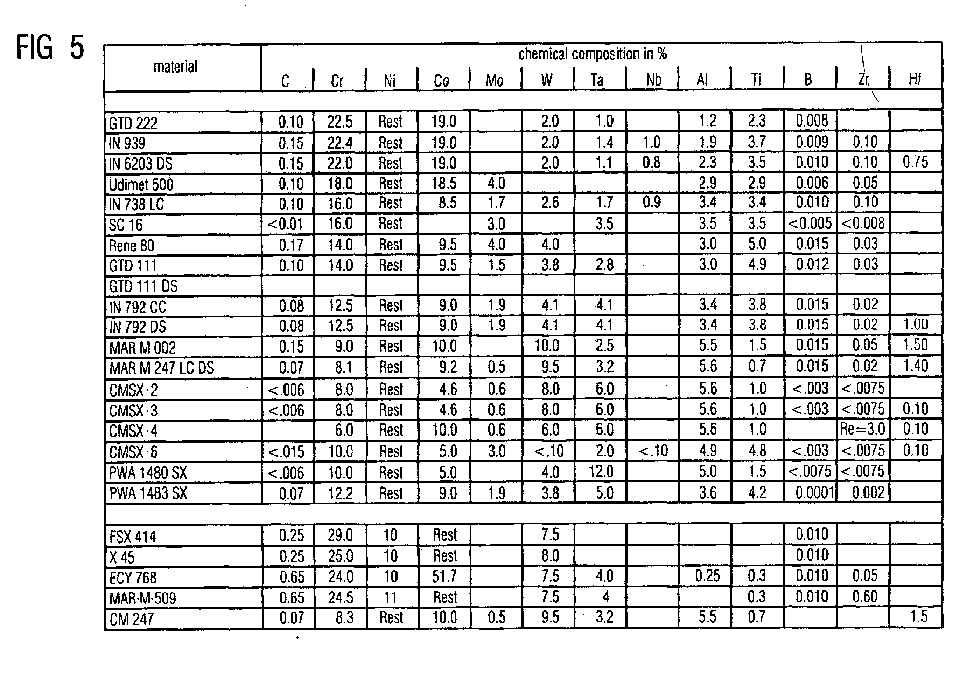

A component 1, 120, 130, 155 is shown in figure 1. It shows a metallic substrate 4 which is especially in the case of component like blades or vanes 120, 130 (fig. 3) for gas turbines 100 (fig. 2) made of a nickel based super alloy as given in figure 5.

On the substrate 4 a metallic bond coat 7 especially of the type MCrAlY is preferably applied.

In some cases a ceramic thermal barrier coating TBC 16 can be direct applied on the substrate 4.
On the substrate 4 or on the bond coat 7 an aluminum oxide layer 8 (TGO) is formed during applying the ceramic TBC or at least during operations of the coating system.

The bond coat 7 is preferably a two layered metallic layer with a reduced amount of aluminium and/oder chromium in the upper area. Preferably this upper metallic layer has about 16%-18% chromium (Cr) and 4% to 5% aluminium (Al).
This improves the ductility of the metallic layer which faces directly the ceramic layers.

The ceramic thermal barrier coating 16 is a two layered ceramic layered coating 10, 13.
Especially the ceramic TBC 16 consists only of two layers 10, 13.

The inner ceramic coating 10 on the metallic bond coat 7 over or on the substrate 4 is nanostructured and especially much thinner than the above laying ceramic layer 13. This improves the ductility and adherence of the ceramic coating.

Nanostructured means that about 70%, especially at least 90% of the grain sizes of the ceramic layer 10 are lower then 500nm, especially ≤ 300nm.
The minimum grain sizes to avoid sintering are larger than ( ≥ ) 100nm and very especially ≥ 200nm.
Only the inner ceramic layer 10 is nanostructured. The outer layer 13 is microstructured
Microstructured means that at least 70%, especially at least 90% of the grain sizes of the grains are larger than 1µm, especially larger than 20µm.

The lower layer 10 is especially much thinner than the upper ceramic thermal barrier coating 10.

This means that the thickness of the upper layer 13 comprises at least 60%, especially 70% of the total thickness of the ceramic layer 13.

Especially the lower ceramic layer 10 has a thickness up to 100µm with a minimum of 10µm, especially of 20µm.

Especially, the inner ceramic layer 10 has a porosity up to 14vol%, especially between 9vol% to 14vol%.
Especially the upper ceramic layer 13 has a much higher porosity than the inner ceramic layer 10 (difference at least 10%, especially ≥ 20%), especially a porosity higher than 15vol% and a porosity up to 30vol%.

The upper layer 13 can be applied by any coating method like plasma spray, HVOF or cold gas spraying.
The nano structured ceramic layer 10 is preferably applied by a suspension, plasma spraying or solution precursor plasma spraying or any sol gel technique.

The material of the two ceramic layers 10, 13 can be the same, especially it is yttrium stabilized zirconia. Furthermore, the inner ceramic layer 10 can be a nano structured partially stabilized zirconia and the upper layer 13 offers a different composition and is especially a ceramic layer with a structure of a pyrochlor, which is especially gadolinium zirconate (like Gd₂Zr₂O₇) or gadolinium hafnate (like Gd₂Hf₂O₇).

Figure 3 shows a perspective view of a rotor blade 120 or guide vane 130 of a turbomachine, which extends along a longitudinal axis 121.

The turbomachine may be a gas turbine of an aircraft or of a power plant for generating electricity, a steam turbine or a compressor.

The blade or vane 120, 130 has a securing region 400, an adjoining blade or vane platform 403 and a main blade or main part 406 in succession along the longitudinal axis 121. As guide vane 130, the vane 130 may have a further platform (not shown) at its vane tip 415.

A blade or vane root 183, which is used to secure the rotor blades 120, 130 to a shaft or disk (not shown), is formed in the securing region 400. The blade or vane root 183 is designed, for example, in hammerhead form. Other configurations, such as fir-tree or dovetail root, are also possible. The blade or vane 120, 130 has a leading edge 409 and a trailing edge 412 for a medium which flows past the main blade or vane part 406.

In the case of conventional blades or vanes 120, 130, by way of example, solid metallic materials, in particular superalloys, are used in all regions 400, 403, 406 of the blade or vane 120, 130. Superalloys of this type are known, for example, from EP 1 204 776 B1, EP 1 306 454, EP 1 319 729 A1, WO 99/67435 or WO 00/44949; these documents form part of the present disclosure with regard to the chemical composition of the alloy. The blade or vane 120, 130 may in this case be produced by a casting process, also by means of directional solidification, by a forging process, by a milling process or combinations thereof.

Workpieces with a single-crystal structure or structures are used as components for machines which are exposed to high mechanical, thermal and/or chemical loads during operation. Single-crystal workpieces of this type are produced, for example, by directional solidification from the melt. This involves casting processes in which the liquid metallic alloy is solidified to form the single-crystal structure, i.e. the single-crystal workpiece, i.e. directionally. In the process, dendritic crystals are formed in the direction of the heat flux and form either a columnar-crystalline grain structure (i.e. with grains which run over the entire length of the workpiece and are referred to in this context, in accordance with the standard terminology, as directionally solidified) or a single-crystal structure, i.e. the entire workpiece consists of a single crystal. In this process, the transition to globular (polycrystalline) solidification needs to be avoided, since non-directional growth inevitably leads to the formation of transverse and longitudinal grain boundaries, which negate the good properties of the directionally solidified or single-crystal component. Where directionally solidified microstructures are referred to in general, this is to be understood as encompassing both single crystals, which do not have any grain boundaries or at most have small-angle grain boundaries, and columnar crystal structures, which do have grain boundaries running in the longitudinal direction, but do not have any transverse grain boundaries. In the case of these latter crystalline structures, it is also possible to refer to directionally solidified microstructures (directionally solidified structures). Processes of this type are known from US 6, 024, 792 and EP 0.892 090 A1.

The blades or vanes 120, 130 may also have coatings protecting against corrosion or oxidation, e.g. (MCrAlX; M is at least one element selected from the group consisting of iron (Fe), cobalt (Co), nickel (Ni), X is an active element and stands for yttrium (Y) and/or silicon and/or at least one rare earth element, or hafnium (Hf)). Alloys of this type are known from EP 0 486 489 B1, EP 0 786 017 B1, EP 0 412 397 B1 or EP 1 306.454 A1.

It is also possible for a thermal barrier coating consisting, for example, of ZrO₂, Y₂O₉-ZrO₂, i.e. which is not, is partially or is completely stabilized by yttrium oxide and/or calcium oxide and/or magnesium oxide, to be present on the MCrAlX. Columnar grains are produced in the thermal barrier coating by suitable coating processes, such as for example electron beam physical vapor deposition (EB-PVD).

The term refurbishment means that protective layers may have to be removed from components 120, 130 after they have been used (for example by sandblasting). Then, the corrosion and/or oxidation layers or products are removed. If necessary, cracks in the component 120, 130 are also repaired using the solder according to the invention. This is followed by recoating of the component 120, 130, after which the component 120, 130 can be used again.

The blade or vane 120, 130 may be of solid or hollow design. If the blade or vane 120, 130 is to be cooled, it is hollow and may also include film cooling holes 418 (indicated by dashed lines).

Figure 4 shows a combustion chamber 110 of a gas turbine 100 (Fig. 2).

The combustion chamber 110 is configured, for example, as what is known as an annular combustion chamber, in which a multiplicity of burners 107, which are arranged around an axis of rotation 102 in the circumferential direction, open out into a common combustion chamber space 154, with the burners 107 producing flames 156. For this purpose, the combustion chamber 110 overall is of annular configuration, positioned around the axis of rotation 102.

To achieve a relatively high efficiency, the combustion chamber 110 is designed for a relatively high temperature of the working medium M of approximately 1000°C to 1600°C. To allow a relatively long operating time even with these operating parameters, which are unfavorable for the materials, the combustion chamber wall 153 is provided with an inner lining formed from heat shield elements 155 on its side facing the working medium M. Each heat shield element 155 made from an alloy is equipped on the working medium side with a particularly heat-resistant protective layer (MCrAlX layer and/or ceramic coating) or is made from material that is able to withstand high temperatures (solid ceramic bricks). These protective layers may be similar to the turbine blades or vanes, i.e. meaning for example MCrAlX: M is at least one element selected from the group consisting of iron (Fe), cobalt (Co), nickel (Ni), X is an active element and stands for yttrium (Y) and/or silicon and/or at least one rare earth element, or hafnium (Hf). Alloys of this type are known from EP 0 486 489 B1, EP 0 786 017 B1, EP 0 412 397 B1 or EP 1 306 454 A1, which are intended to form part of the present disclosure with regard to the chemical composition of the alloy.

It is also possible for a, for example, ceramic thermal barrier coating to be present on the MCrAlX, consisting, for example, of ZrO₂, Y₂O₄-ZrO₂, i.e. it is not, is partially or is completely stabilized by yttrium oxide and/or calcium oxide and/or magnesium oxide.

Columnar grains are produced in the thermal barrier coating by suitable coating processes, such as for example electron beam physical vapor deposition (EP-PVD).

The term refurbishment means that protective layers may have to be removed from heat shield elements 155 after they have been used (for example by sandblasting). Then, the corrosion and/or oxidation layers or products are removed. If necessary, cracks in the heat shield element 155 are also repaired using the solder according to the invention. This is followed by recoating of the heat shield elements 155, after which the heat shield elements 155 can be used again.

Moreover, on account of the high temperatures in the interior of the combustion chamber 110, it is possible for a cooling system to be provided for the heat shield elements 155 and/or for their holding elements. The heat shield elements 155 are in this case, for example, hollow and may also include film cooling holes (not shown) which open out into the combustion chamber space 154.

Figure 2 shows, by way of example, a gas turbine 100 in the form of a longitudinal part section. In its interior, the gas turbine 100 has a rotor 103, which is mounted such that it can rotate about an axis of rotation 102 and has a shaft, also known as the turbine rotor. An intake housing 104, a compressor 105 a, for example toroidal, combustion chamber 110, in particular an annular combustion chamber, with a plurality of coaxially arranged burners 107, a turbine 108 and the exhaust casing 109 follow one another along the rotor 103. The annular combustion chamber 110 is in communication with a, for example annular, hot-gas duct 111 where, for example, four successive turbine stages 112 form the turbine 108.

Each turbine stage 112 is formed, for example, from two blade or vane rings. As seen in the direction of flow of a working medium 113, a row 125 formed from rotor blades 120 follows a row 115 of guide vanes in the hot-gas duct 111.

The guide vanes 130 are secured to an inner housing 138 of a stator 143, whereas the rotor blades 120 of a row 125 are fitted to the rotor 103, for example by means of a turbine disk 133. A generator or machine (not shown) is coupled to the rotor 103.

When the gas turbine 100 is operating, the compressor 105 sucks in air 135 through the intake housing 104 and compresses it. The compressed air which is provided at the turbine-side end of the compressor 105 is passed to the burners 107, where it is mixed with a fuel. The mixture is then burnt in the combustion chamber 110 to form the working medium 133. From there, the working medium 133 flows along the hot-gas duct 111 past the guide vanes 130 and the rotor blades 120. The working medium 113 expands at the rotor blades 120, transferring its momentum, so that the rotor blades 120 drive the rotor 103 and the rotor drives the machine coupled to it.

When the gas turbine 100 is operating, the components which are exposed to the hot working medium 113 are subject to thermal loads. The guide vanes 130 and rotor blades 120 of the first turbine stage 112, as seen in the direction of flow of the working medium 113, together with the heat shield elements which line the annular combustion chamber 110, are subject to the highest thermal loads. To withstand the temperatures prevailing there, these components can be cooled by means of a coolant.

It is likewise possible for substrates of the components to have a directional structure, i.e. they are in single-crystal form (SX structure) or include only longitudinally directed grains (DS structure). By way of example, iron-base, nickel-base or cobalt-base superalloys are used as material for the components, in particular for the turbine blades and vanes 120, 130 and components of the combustion chamber 110. Superalloys of this type are known, for example, from EP 1 204 776 B1, EP 1 306 454, EP 1 319 729 A1, WO 99/67435 or WO 00/44949.

The blades and vanes 120, 130 may likewise have coatings to protect against corrosion (MCrAlX; M is at least one element selected from the group consisting of iron (Fe), cobalt (Co), nickel (Ni), X is an active element and stands for yttrium (Y) and/or silicon and/or at least one of the rare earth elements or hafnium). Alloys of this type are known from EP 0 486 489 B1, EP 0 786 017 B1, EP 0 412 397 B1 or EP 1 306 454 A1.

A thermal barrier coating consisting, for example, of ZrO₂, Y₂O₄-ZrO₂, i.e. it is not, is partially or is completely stabilized by yttrium oxide and/or calcium oxide and/or magnesium oxide, may also be present on the MCrAlX. Columnar grains are produced in the thermal barrier coating by suitable coating processes, such as for example electron beam physical vapor deposition (EB-PVD).

The guide vane 130 has a guide vane root (not shown here) facing the inner housing 138 of the turbine 108 and a guide vane head on the opposite side from the guide vane root. The guide vane head faces the rotor 103 and is fixed to a securing ring 140 of the stator 143.

## Claims

1. Layer system which comprises:
a substrate (4),
a metallic bond coat (7) and
a two layered ceramic layer (16) which consists of an inner ceramic (10) and
an outer ceramic (13) layer,
wherein only the inner ceramic layer (10) is nano structured,
wherein the inner ceramic layer (10) has a porosity between 3vol% to 14vol%,
wherein the upper layer (13) has a porosity at least 10% higher than the porosity of the inner layer (10),
wherein the material of the two ceramic layers (10, 13) is the same.

2. Layer system according to claim 1,
wherein the inner ceramic layer (10) is at least 10% thinner than the outer ceramic layer (13).

3. Layer system according to claim 1 or 2,
wherein the inner ceramic layer (10) has a thickness up to 100µm.

4. Layer system according to claim 1, 2 or 3,
wherein the inner ceramic layer (10) has a thickness of at least 10µm.

5. Layer system according to claim 1, 2, 3 or 4,
wherein the upper layer (13) has a porosity up to 30vol%, especially > 15vol% to 30vol%.

6. Layer system according to claim 1, 2, 3, 4 or 5,
wherein the material of the inner ceramic layer (10) comprises zirconia.

7. Layer system according to any of the preceding claims,
wherein the maximum grain size of at least 90% of the grains of the nanostructured layer (10) is 500nm.

8. Layer system according to any of the preceding claims,
wherein the grain size of the inner layer (10) is at least 50nm.

9. Layer system according to any of the preceding claims,
wherein the outer ceramic layer (13) has at least 70% grain sizes larger than 10µm.

10. Layer system according to any of the preceding claims,
wherein the bond coat (7) is a two layered metallic layer, especially with a reduced amount of aluminium (Al) and/or chromium (Cr) in the upper area.

11. Layer system according to claim 10,
Wherein the amount about chromium (Cr) is 16wt% to 18wt% chromium (Cr) and/or 4wt% to 5wt% aluminium (Al).

## Patentansprüche

1. Schichtsystem, das aufweist:
ein Substrat (4),
eine metallische Haftvermittlerschicht (7) und
eine zweischichtige Keramikschicht (16), die aus einer inneren Keramikschicht (10) und
einer äußeren Keramikschicht (13) besteht,
wobei nur die innere Keramikschicht (10) nanostrukturiert ist,
wobei die innere Keramikschicht (10) eine Porosität zwischen 3 Vol.-% und 14 Vol.-% aufweist,
wobei die obere Schicht (13) eine Porosität aufweist, die mindestens 10% höher ist als die Porosität der Innenschicht (10),
wobei das Material der beiden Keramikschichten (10, 13) das gleiche ist.

2. Schichtsystem nach Anspruch 1,
wobei die innere Keramikschicht (10) mindestens 10% dünner ist als die äußere Keramikschicht (13).

3. Schichtsystem nach Anspruch 1 oder 2,
wobei die innere Keramikschicht (10) eine Dicke bis zu 100 µm aufweist.

4. Schichtsystem nach Anspruch 1, 2 oder 3,
wobei die innere Keramikschicht (10) eine Dicke von mindestens 10 µm aufweist.

5. Schichtsystem nach Anspruch 1, 2, 3 oder 4,
wobei die obere Schicht (13) eine Porosität bis zu 30 Vol.-%, insbesondere > 15 Vol.-% bis 30 Vol.-%, aufweist.

6. Schichtsystem nach Anspruch 1, 2, 3, 4 oder 5,
wobei das Material der inneren Keramikschicht (10) Zirkonoxid umfasst.

7. Schichtsystem nach einem der vorhergehenden Ansprüche,
wobei die maximale Korngröße von mindestens 90% der Körner der nanostrukturierten Schicht (10) 500 nm beträgt.

8. Schichtsystem nach einem der vorhergehenden Ansprüche,
wobei die Korngröße der inneren Schicht (10) mindestens 50 nm beträgt.

9. Schichtsystem nach einem der vorhergehenden Ansprüche,
wobei die äußere Keramikschicht (13) mindestens 70% Korngrößen von mehr als 10 µm aufweist.

10. Schichtsystem nach einem der vorhergehenden Ansprüche,
wobei die Haftvermittlerschicht (7) eine zweischichtige metallische Schicht ist, insbesondere mit einer verringerten Menge Aluminium (Al) und/oder Chrom (Cr) im oberen Bereich.

11. Schichtsystem nach Anspruch 10,
wobei die Menge um Chrom (Cr) 16 Gew.-% bis 18 Gew.-% Chrom (Cr) und/oder 4 Gew.-% bis 5 Gew.-% Aluminium (Al) beträgt.

## Revendications

1. Système de couches qui comprend :
un substrat (4),
un enduit (7) métallique de liaison et
une couche (16) en céramique à deux strates qui consistent en
une strate intérieure en céramique (10) et
une strate extérieure en céramique (13),
dans lequel seule la couche (10) intérieure en céramique est nanostructurée,
dans lequel la couche (10) intérieure en céramique a une porosité allant de 3% en volume à 14% en volume,
dans lequel la couche (13) supérieure a une porosité plus grande d'au moins 10 % que la porosité de la couche (10) intérieure,
dans lequel le matériau des deux couches (10, 13) en céramique est le même.

2. Système de couches suivant la revendication 1,
dans lequel la couche (10) intérieure en céramique est plus mince d'au moins 10 % que la couche (13) extérieure en céramique.

3. Système de couches suivant la revendication 1 ou 2,
dans lequel la couche (10) intérieure en céramique a une épaisseur allant jusqu'à 100 µm.

4. Système de couches suivant la revendication 1, 2 ou 3,
dans lequel la couche (10) intérieure en céramique a une épaisseur d'au moins 10 µm.

5. Système de couches suivant la revendication 1, 2, 3 ou 4,
dans lequel la couche (13) supérieure a une porosité allant jusqu'à 30% en volume, en particulier > 15% en volume à 30% en volume.

6. Système de couches suivant la revendication 1, 2, 3, 4 ou 5,
dans lequel le matériau de la couche (10) intérieure en céramique comprend de l'oxyde de zirconium.

7. Système de couches suivant l'une des revendications précédentes, dans lequel la granulométrie maximum d'au moins 90 % des grains de la couche (10) nanostructurée est de 500 nm.

8. Système de couches suivant l'une quelconque des revendications précédentes, dans lequel la granulométrie de la couche (10) intérieure est d'au moins 50 nm.

9. Système de couches suivant l'une quelconque des revendications précédentes, dans lequel la couche (13) extérieure en céramique a au moins 70% de la granulométrie plus grande que 10µm.

10. Système de couches suivant l'une quelconque des revendications précédentes, dans lequel l'enduit (7) de liaison est une couche métallique à deux strates ayant en particulier une quantité réduite d'aluminium (Al) et/ou de chrome (Cr) dans la zone supérieure.

11. Système de couches suivant la revendication 10, dans lequel la quantité de chrome (Cr) va de 16% en poids à 18% en poids de chrome (Cr) et/ou celle d'aluminium de 4% en poids à 5% en poids d'aluminium (Al).
